# EUROPÄISCHE PATENTSCHRIFT

(11) **EP 0 744 128 B1**
(45) Veröffentlichungstag und Bekanntmachung des Hinweises auf die Patenterteilung: **29.12.1999**
(21) Anmeldenummer: 96107923.3
(22) Anmeldetag: 17.05.1996
(51) Int. Cl.: A22B 5/00

(54) **Vorrichtung zum lagedefinierten Fixieren von hängenden Schlachttier-Körperhälften, insbesondere bei der automatisierten Schlachttierzerlegung**
Apparatus for holding carcass halves in a fixed position, especially for automatic deboning
Dispositif pour maintenir des demis-carcasses dans une position fixe, en particulier pour le désossage automatique

(30) Priorität: 20.05.1995 DE 19518578
(43) Veröffentlichungstag der Anmeldung: 27.11.1996
(73) Patentinhaber: Banss Maschinenfabrik GmbH & Co. KG, D-35216 Biedenkopf (DE)
(72) Erfinder: Brunet, Hans, 35041 Marburg (DE); Schäfer, Michael, 35236 Breidenbach-Oberdieten (DE)
(74) Vertreter: Klunker . Schmitt-Nilson . Hirsch

(56) Entgegenhaltungen:
- EP-A- 0 273 371
- WO-A-94/14325
- WO-A-94/24873
- DE-A- 3 231 862
- DE-A- 4 223 789
- DE-A- 4 317 418
- FR-A- 2 513 080

## Beschreibung

Die Erfindung bezieht sich auf eine Vorrichtung zum lagedefinierten Fixieren von hängenden Schlachttier-Körperteilen, insbesondere bei der automatisierten Schlachttierzerlegung, mit einem Gestell und einer Mehrzahl von Arlageelementen, die an dem Gestell befestigt sind.

Eine derartige Vorrichtung zum Fixieren von Rindervierteln bei der Zerlegung ist aus FR-A-25 13 080 bekannt. Die bekannte Vorrichtung weist zwei Anlageelemente und ein zangenartiges Greifelement auf, die alle in einer einzigen Reihe angeordnet sind.

Im Schlachthof und bei der weiteren Verarbeitung vom geschlachteten Tier zu marktgängigen Fleischteilen gibt es Situationen, bei denen sich die Arbeitsvorgänge erheblich erleichtern lassen, wenn die betreffende Schlachttier-Körperhälfte lagedefiniert fixiert ist. Dies gilt in ganz besonders hohem Maße bei der automatisierten Schlachttierzerlegung, wo ohne lagedefiniertes Fixieren mit hoher Genauigkeit kein überzeugendes Ergebnis der automatisierten Schlachttierzerlegung zu erwarten ist.

Die Erfindung liegt die Aufgabe zugrunde, eine Vorrichtung der eingangs genannten Art verfügbar zu machen, die ein lagedefiniertes Fixieren von hängenden Schlachttier-Körperhälften mit hoher Genauigkeit ermöglicht und eine bequeme Arbeitsweise erlaubt.

Zur Lösung dieser Aufgabe ist die Vorrichtung erfindungsgemäß gekennzeichnet als Vorrichtung zum lagedefinierten Fixieren von hängenden Schlachttier-Körperhälften.
(a) dadurch, daß die genannten Arlageelemente so positioniert sind, daß die Trennseite der Körperhälfte an mehreren Stellen ihres bauchseitigen Randbereichs und ihres rückenseitigen Randbereichs durch Anlage abstützbar ist,
(b) wobei die Anlageflächen der Anlageelemente in einer gemeinsamen Ebene liegen;
(c) durch einen an dem Gestell befestigten, durch Fremdkraft schwenkbaren Halter pro Arlageelement, um die Anlagestellen der Körperhälfte gegen das betreffende Anlageelement zur Anlage zu bringen und/oder in Anlage zu halten;
(d) und durch ein an dem Gestell befestigtes, durch Fremdkraft betätigbares Drückelement zum Drücken gegen den bauchseitigen Randbereich der Körperhälfte in einer Höhenposition, die im wesentlichen der Höhenposition eines Anlageelement-Halter-Paars für den rückenseitigen Randbereich im Höhenbereich der Rippen der Körperhälfte entspricht.

Bei der erfindungsgemäßen Vorrichtung wird die zu fixierende Körperhälfte mit einer Mehrzahl von Anlegestellen, die sich am bauchseitigen Randbereich und am rückenseitigen Randbereich der Trennseite der Körperhälfte (d.h. der "Ebene", in der die linke und die rechte Körperhälfte z.B. durch Sägen voneinander getrennt worden sind) befinden, mit Hilfe von fremdkraftbetätigten Haltern gegen die Anlageelemente zur Anlage gebracht und in Anlage gehalten. Da die Anlageflächen der Anlageelemente alle in einer gemeinsamen Ebene, vorzugsweise einer Vertikalebene, liegen, erreicht man eine Fixierung der Körperhälfte in einem undeformierten Zustand. Besonders kritisch für das Fixieren ist der Brustkorbbereich bzw. Höhenbereich der Rippen, der sich bei an einem Hinterbein aufgehängter Körperhälfte ziemlich weit unten an der Körperhälfte befindet. Da das Brustbein längs getrennt worden ist, stellt der die Rippen enthaltende Rippenbogen einen recht nachgiebigen, unstabilen Bereich der Körperhälfte dar. Im Brust-Rippen-Bereich wird der bauchseitige Randbereich der Körperhälfte nicht mit einem Anlageelement-Halter-Paar fixiert wie an den anderen Anlagestellen, sondern mit einem Drückelement in eine günstige Richtung gedrückt.

Vorzugsweise ist mindestens das Drückelement und/oder das korrespondierende, rippenbereichzugeordnete Anlageelement-Halter-Paar durch Fremdkraft in der Höhe verstellbar, wobei man allerdings auch bei anderen Anlageelement-Halter-Paaren eine Höhenverstellbarkeit vorsehen kann. Gerade im beim Hängen etwa unteren Drittel der Körperhälfte hängt der Erfolg des Fixierens davon ab, in welcher Höhenposition, bezogen auf die Gesamthöhe des Brust- bzw. Rippenbereichs, insbesondere das Drückelement angesetzt wird. Insofern ist es besonders günstig, die Länge der jeweiligen zu fixierenden Körperhälfte zu erfassen, z.B. durch mehrere Lichtschranken übereinander, einen Lichtschleier oder einen von unten her an die Körperhälfte herangeführten Meßtaster, und dann aufgrund dieser Längenerfassung die Höhenverstellung, vorzugsweise selbsttätig, vorzunehmen.

Häufig wird die erfindungsgemäße Vorrichtung in einem Umfeld eingesetzt, bei dem zu fixierende Körperhälften der Reihe nach hängend zu der Vorrichtung hingefördert werden. Um dann das lagedefinierte Fixieren in der Vorrichtung problemlos durchführen zu können, ist es normalerweise günstig, das Gestell insgesamt oder einen Teil des Gestells durch Fremdkraft quer zu der Hinförderrichtung verfahrbar zu machen. Bei aus dem Förderweg herausverfahrenem Gestell oder Teil des Gestells gestaltet sich das Hinfördern der Körperhälfte zu der Stelle, wo sie dann fixiert werden soll, deutlich einfacher.

Für den Aufbau des Gestells gibt es eine ganze Reihe von konstruktiven Möglichkeiten. Als besonders günstig wird angesehen, wenn das Gestell als Hauptbestandteile aufrechte Stangen, vorzugsweise vier aufrechte Stangen, aufweist, die mindestens paarweise durch Querstangen verbunden sind. Weitere Einzelheiten hierzu werden weiter unten erläutert.

Wenn man eine Körperhälfte an einem Hinterbein aufhängt, nimmt die Körperhälfte, zumindest wenn kein Kopf mehr vorhanden ist, eine Schräghängelage ein, weil im Brustbereich mehr Masse zur Rückenseite hin konzentriert ist. Aus diesem Grunde ist es bevorzugt, das Gestell der Vorrichtung entsprechend dieser Schräghängelage schräggestellt vorzusehen. Die Schrägstellung des Gestells wird einmalig gemäß einer durchschnittlichen Schräghängelage eingestellt und dann normalerweise nicht mehr verändert.

Im vorstehenden Text sind mehrfach fremdkraftbetätigte Bewegungen angesprochen worden. Als Antrieb hierfür eignen sich ganz besonders, vorzugsweise pneumatische, Zylinder-Kolben-Einheiten.

In umfangreicher Entwicklungsarbeit ist gefunden worden, daß man bei der erfindungsgemäßen Vorrichtung mit einer überraschend geringen Anzahl von Anlageelement-Halter-Paaren auskommen kann, nämlich drei verteilt über den rückenseitigen Randbereich und zwei für den bauchseitigen Randbereich, im wesentlichen gegenüberliegend den zwei oberen für den rückenseitigen Randbereich.

Weiterer Gegenstand der Erfindung ist eine Anlage zur automatisierten Zerlegung von Schlachttier-Körperhälften, gekennzeichnet durch
(a) eine Vorrichtung zum lagedefinierten Fixieren der zu zerlegenden Körperhälfte, mit den Merkmalen mindestens eines der Ansprüche 1 bis 9;
(b) einem Gerät zur optischen Erfassung der Gestalt der Körperhälfte;
(c) einem Rechner, der aufgrund der Erfassung der Gestalt der Körperhälfte die Lage von zu führenden Zerlegungsschnitten berechnet;
(d) und einen Zerlegeroboter, der aufgrund der von dem Rechner errechneten Daten Zerlegungsschnitte ausführt.

Die Erfindung kommt ganz besonders in Betracht beim lagedefinierten Fixieren und beim automatisierten Zerlegen von Schweinehälften, aber auch für andere Tierhälften wie Rinderhälften oder Schafhälften.

Die Erfindung und Weiterbildungen der Erfindung werden nachfolgend anhand eines zeichnerisch dargestellten Ausführungsbeispiels noch näher erläutert. Es zeigt:
- **Fig. 1**: stark schematisiert eine Draufsicht auf eine automatische Zerlegeanlage;
- **Fig. 2**: eine Fixierungsvorrichtung in Horizontalansicht gemäß Pfeil II in **Fig. 1**;
- **Fig. 3**: ein Anlageelement-Klammer-Paar ersten Typs, in Draufsicht und in vergrößertem Maßstab;
- **Fig. 4**: ein Anlageelement-Halter-Paar zweiten Typs, in Draufsicht und in vergrößertem Maßstab;
- **Fig. 5**: ein Drückelement in Draufsicht und in vergrößertem Maßstab.

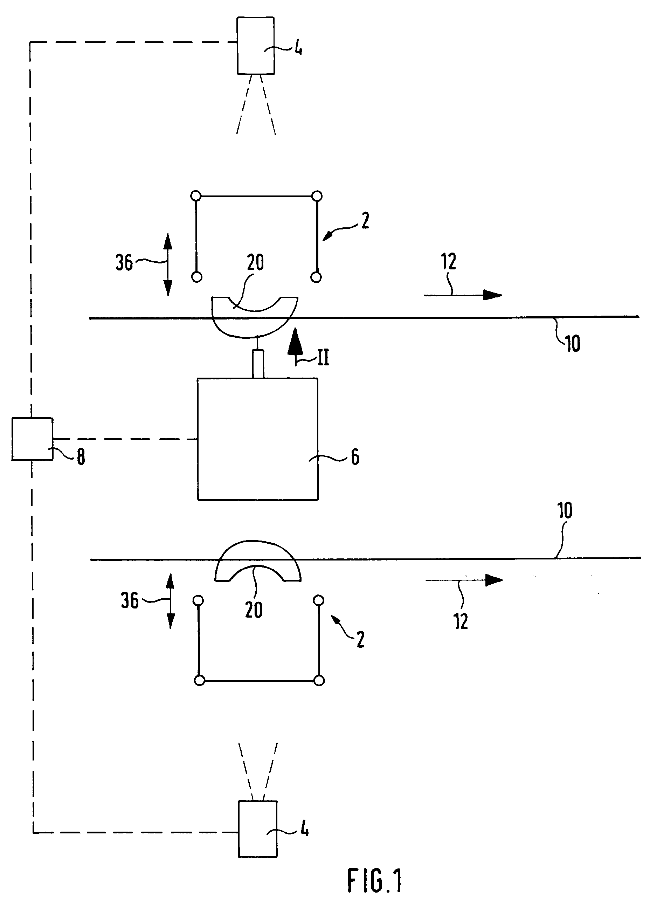

Anhand der **Fig. 1** wird der Gesamtaufbau einer erfindungsgemäßen Zerlegeanlage veranschaulicht. Diese Anlage besteht im wesentlichen aus zwei Fixierungsvorrichtungen 2 (die stark schematisiert jeweils nur durch ihre vier Gestellstangen dargestellt sind), einer Videokamera 4 pro Fixierungsvorrichtung 2, einem Zerlegeroboter 6, der zwischen den zwei Fixierungsvorrichtungen 2 postiert ist, und einem Rechner 8, an den die Videokameras 4 und der Zerlegeroboter 6 angeschlossen sind.

Längs ganz schematisch eingezeichneter Rohrbahnen 10 können in Richtung der Pfeile 12 der Reihe nach Körperhälften, mit einem Hinterbein an einem Gleithaken oder Rollhaken der Rohrbahn 10 angehängt, gefördert werden. Auf der einen Rohrbahn 10 werden z.B. lauter linke Körperhälften und auf der anderen Rohrbahn 10 lauter rechte Körperhälften gefördert, wobei normalerweise die von einem Tier stammenden Körperhälften etwa gleich weit vorangefördert worden sind.

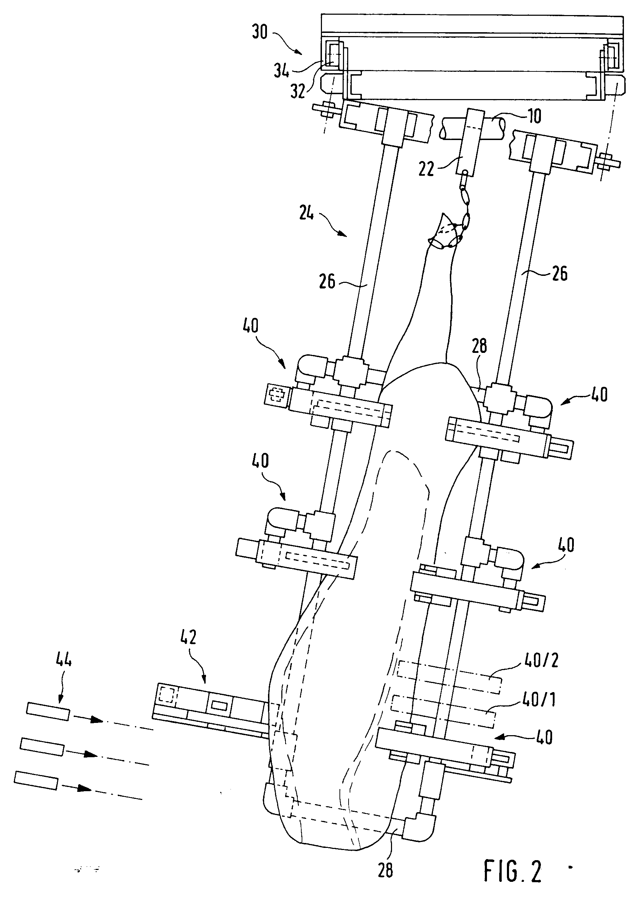

In jeder Fixierungsvorrichtung 2 ist stark schematisiert eine hängende Körperhälfte 20 eingezeichnet. Die beiden Körperhälften 20 sind mit ihrer Außenseite bzw. Hautseite dem Zerlegeroboter 6 bzw. einander zugewandt und bieten ihre Innenseite jeweils der dortigen Videokamera 4 zum Erfassen der Gestalt der Körperhälfte dar. Wenn der Haken 22 (siehe **Fig. 2**), an dem die betreffende Körperhälfte 20 hängt, die korrekte Position relativ zu der Fixierungsvorrichtung 2 erreicht hat, wird er auf der Rohrbahn 10 durch eine vordere Rohrbahnsperre und eine hintere Rücklaufsperre fixiert.

Das lagedefinierte Fixieren läßt sich zunächst anhand von **Fig. 2** beschreiben, wobei weitere Einzelheiten anschließend beschrieben werden. Zunächst erkennt man, daß die Fixierungsvorrichtung 2 ein Gestell 24 aufweist, das im wesentlichen aus vier aufrechten, rohrförmigen Stangen 26 und diese Stangen 26 quer miteinander verbindenden Querstangen 28 besteht. Aus weiter unten noch deutlicher werdenden Gründen sind allerdings die zwei dem Zerlegeroboter 6 zugewandten Stangen 26 nicht durch Querstangen miteinander verbunden.

Die aufrechten Stangen 26 sind nicht ganz vertikal, und die Querstangen 28 sind nicht ganz horizontal, weil das käfigartige Gestell 24 aus dem weiter vorn geschilderten Grund etwas schräggestellt ist (wobei diese Schrägstellung in **Fig. 2** aus Gründen der Deutlichkeit übertrieben gezeichnet ist).

Dieses ganze Gestell 24 ist oben an einem Rahmen 30 befestigt, der rechts und links in **Fig. 2** äußere Rollen 32 trägt. Mittels dieser Rollen kann der Rahmen 30 und damit das Gesamtgestell 24 längs Schienen 34, welche einen U-förmigen, zur Seite offenen Querschnitt haben, verfahren werden. Die Verfahrrichtung ist mit dem Doppelpfeil 36 in **Fig. 1** angedeutet, ist also rechtwinklig zur Zeichnungsebene der **Fig. 2**. Die Rohrbahn 10 liegt paralell zur Zeichnungsebene der **Fig. 2**. Bevor eine neue Körperhälfte 20 zur Fixierung in die Fixierungsvorrichtung 2 gebracht wird, wird das Gestell 24 "nach außen", d.h. weiter weg von dem Zerlegeroboter 6, mittels der Rollen 32 in den Schienen 34 verfahren, und zwar mittels eines nicht eingezeichneten Zylinder-Kolben-Antriebs. Wenn dann der nächste Haken 22 mit der nächsten Körperhälfte 20 die korrekte Position längs der betreffenden Rohrbahn 10 erreicht hat, wird das Gestell 24 wieder in seiner gezeichnete Arbeitsposition verfahren.

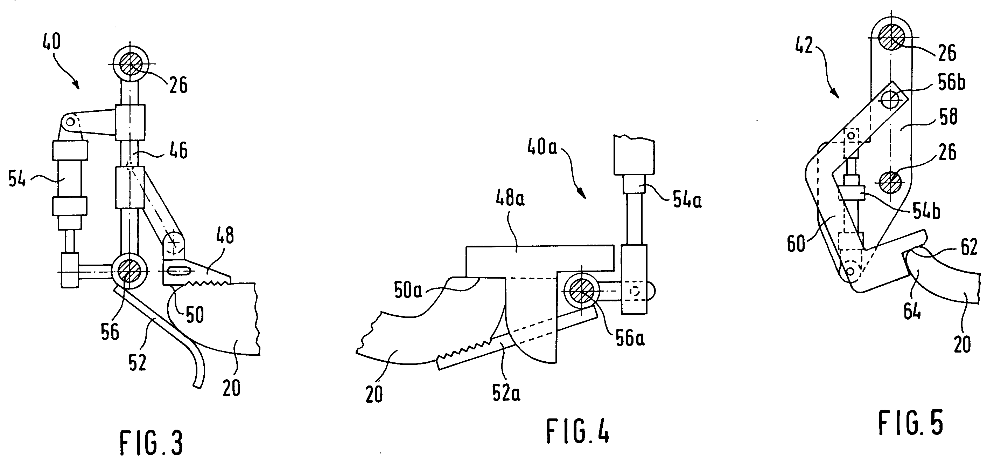

In **Fig. 2** sieht man, daß die Fixierungsvorrichtung 2 insgesamt fünf Anlageelement-Halter-Paare 40 aufweist, nämlich drei der Höhe nach einigermaßen gleichmäßig (aber nicht geometrisch exakt gleichmäßig) über den rückenseitigen Randbereich der Trennseite der Körperhälfte 20 verteilt, und zwei für den bauchseitigen Randbereich der Trennseite der Körperhälfte 20, wobei die beiden letztgenannten Paare 40 den beiden oberen Paaren 40 für den rückenseitigen Randbereich (recht in **Fig. 2**) gegenüberliegen. Den Aufbau der Paare 40 kann man der **Fig. 2** nicht gut entnehmen; hierzu erfolgt detailliertere Beschreibung weiter unten unter Benutzung der **Fig. 3** und **4**.

Etwa das unterste Drittel der Länge der Körperhälfte 20 wird von dem Brust- bzw. Rippenbereich eingenommen. In **Fig. 2** sieht man, daß ein Drückelement 42 an den bauchseitigen Randbereich der Körperhälfte in diesem "Höhenbereich der Rippen" angreift, wobei das Drückelement 42 dem untersten Anlageelement-Klammer-Paar 40 für den rückenseitigen Randbereich gegenüberliegt. Mit dem Bezugszeichen 44 sind drei höhenmäßig gestaffelte Lichtschranken angedeutet, mit denen sich die Länge der Körperhälfte 20 in Stufen erfassen läßt. Als genauer bevorzugt sind an dieser Stelle allerdings andere Einrichtungen zum Erfassen der Länge der Körperhälfte 20, möglichst stufenlos und recht genau. In Abhängigkeit von der Länge der jeweils zu fixierenden Körperhälfte werden das unterste Paar 40 und das quasi zugehörende Druckelement 42 höhenmäßig verstellt, wie für das Paar 40 durch die gestrichelt eingezeichneten Positionen 40/1 und 40/2 angedeutet ist (aber für das Drückelement 42 zum Erhalt der Übersichtigkeit nicht angedeutet ist).

In **Fig. 3** ist ein Anlageelement-Halter-Paar 40 eines ersten Typs in Draufsicht genauer dargestellt. An einer waagerechten Tragstange 46, die ihrerseits an einer dem Zerlegeroboter näheren aufrechten Stange 26 befestigt ist, ist ein Anlageelement 48 stationär befestigt. Dieses Anlageelement 48 bietet eine Anlagefläche 50 dar. Ferner ist eine Klammer 52 vorgesehen, die in **Fig. 3** schräg nach rechts-unten verläuft und mittels einer Zylinder-Kolben-Einheit 54 in die gezeichnete Schließstellung bringbar ist, aber auch durch Schwenken im Uhrzeigersinn um die der Stange 26 parallele Schwenkachse 56 in eine nicht eingezeichnete Offenstellung bringbar ist.

Bei dem in **Fig. 4** gezeichneten Anlageelement-Halter-Paar 40a zweiten Typs bietet das Anlageelement 48a nicht nur eine Anlagefläche 50a in analoger Ausrichtung wie bei dem Paar 40 von **Fig. 3**, sondern einen Anlage-Winkelraum. Das Anlageelement 48a ist an der in Fig. 2 rechten, dem Zerlegeroboter 6 näheren Stange 26 befestigt. Der zugeordnete Halter 52a ist wiederum schwenkbar um die zu den Stangen 26 parallele Achse 56a zwischen der gezeichneten Schließstellung, in der er schräg nach links unten verläuft, und einer nicht gezeichneten Offenstellung gegen den Uhrzeigersinn verschwenkbar, und zwar mittels der nur angedeuteten Zylinder-Kolben-Einheit 54a.

Der von dem jeweiligen Paar 40 bzw. 40a in Eingriff genommene Bereich der betreffenden Körperhälfte 20 ist ebenfalls eingezeichnet.

Zurück zu **Fig. 2** wird darauf hingewiesen, daß das oberste linke Paar 40 und das oberste rechte Paar 40 beide vom ersten Typ sind (linkes Paar 40 siehe **Fig. 3**, rechtes Paar dazu spiegelbildlich), daß das linke "mittlere" bzw. untere Paar 40 vom ersten Typ ist, während das rechte mittlere Paar 40a und das rechte untere Paar 40a vom zweiten Typ (**Fig. 4**) sind.

In **Fig. 5** ist das Drückelement 42 größer dargestellt. Es ist an die in **Fig. 2** zwei linken Stangen 26 des Gestells 24 mit einem Basisteil 58 längsverschiebbar angeschlossen. Relativ zu dem Basisteil 58 läßt sich mittels einer Zylinder-Kolben-Einheit 54b ein Eingriffsteil 60 verschwenken, welches in Draufsicht eine zweifach abgeknickte Gestalt hat; die zu den Stangen 26 parallele Schwenkachse ist 56b. Das freie Ende des Eingriffsteils 60 bietet einen in Draufsicht winkelförmigen Anlageraum 62 dar. Beim Schwenken des Eingreifteils 60 gegen den Uhrzeigersinn wird Druck auf den im Aufnahmeraum 62 befindlichen, bauchseitigen Randbereich 64 der Körperhälfte 20 ausgeübt, und zwar in **Fig. 5** etwa nach rechts.

Es wird darauf hingewiesen, daß die Anlageflächen 50 sämtlicher Anlageelemente 48 bzw. 48a in einer gemeinsamen Ebene liegen, also im fixierten Zustand die Trennfläche der Körperhälfte 20 (die in **Fig. 2** vom Betrachter weg weist) in einer Vertikalebene fixiert wird.

Zum Erhalt der Übersichtlichkeit sind in **Fig. 2** eine Zylinder-Kolben-Einheit zur Höheneinstellung, d.h. Verschiebung längs der betreffenden Stange 26, des Drückelements 42 und eine Zylinder-Kolben-Einheit zur Höhenverstellung, d.h. Bewegung in Längsrichtung der betreffenden Stange 26, nicht eingezeichnet.

Es ist leicht vorstellbar, daß bei den in **Fig. 2** zwei linken Anlageelement-Halter-Paaren 40 und dem Drückelement 42 durch Verschwenken der Halter 52 bzw. des Eingriffsteils 60 im Uhrzeigersinn, und bei den in **Fig.2** rechten Anlageelement-Halter-Paaren 40 durch Verschwenken der Halter 52 bzw. 52a gegen den Uhrzeigersinn, eine Situation entsteht, in der die Vorrichtung 2 an ihrer dem Zerlegeroboter 6 zugewandten Seite "offen" ist. Durch Verfahren des Gestells 24 auf den Zerlegeroboter 6 zu in ihre Arbeitsstellung werden die Anlagestellen der Körperhälfte 20 zum Teil oder alle schon in Berührung mit den Anlageflächen 50 gebracht. Spätestens erfolgt die Anlage jedoch anschließend, wenn alle fünf Halter 52 bzw. 52a und das Eingriffsteil 60 in die geschlossene Stellung bewegt werden.

Anschließend erfolgt die bereits angesprochene Erfassung der Gestalt der betreffenden Körperhälfte 20 mittels der zugeordneten Videokamera 4. Dann tritt, gesteuert durch den Rechner 8, der Zerlegeroboter 6 in Funktion und führt die sogenannten "ersten großen Schnitte" automatisch durch. In der Zeit von der Gestalterfassung durch die Videokamera 4 und dem Beginn der Arbeit des Zerlegeroboters 6 hat sich aufgrund der Fixierung der betreffenden Körperhälfte 20 nichts an der Position der Körperhälfte 20 geändert. Auch während der Arbeit des Zerlegeroboters 6 stellt die Fixierung sicher, daß sich die betreffende Körperhälfte 20 zumindest nicht unzulässig stark aus ihrer Position bewegt.

In **Fig. 2** ist gut erkennbar, daß die Halter 52 bzw. 52a die Körperhälfte auf der dem Betrachter zugewandten Außenseite bzw. Hautseite nur in Randbereichen abdecken, so daß diejenigen Bereiche der Körperhälfte 20, wo der Zerlegeroboter 6 die Schnitte ausführen soll, freigelassen sind. Die Schlachttierteile, die sich aufgrund der Arbeit des Zerlegeroboters 6 ergeben, fallen nach Öffnen der Anlageelement-Halter-Paare 40 bzw. 40a einfach nach unten z.B. in dort bereitstehende Behälter oder auf entsprechende Förderer.

Alternativ kann man auch gleichsam nur die in **Fig. 2** linke Hälfte des Gestells 24 rechtwinklig zur Zeichnungsebene verfahren. Auch dies macht den Zuförderweg für die jeweils nächste Körperhälfte 20 frei. In diesem Fall sind die beiden in **Fig. 2** rechten Stangen 26 nicht mit den beiden in **Fig. 2** linken Stangen 26 durch Querstangen 28 verbunden.

Damit die jeweils zu der Vorrichtung 2 bingeförderte Körperhälfte 20 mit ihrer Trennfläche schon einigermaßen gut in der Ebene der Anlageflächen 50 bzw. parallel dazu ausgerichtet ist (d.h. keine Verdrehung der Körperhälfte 20 um deren Längsachse stattfindet), kann man eine waagerechte Führungsleiste für die Trennfläche in einer geeigneten Höhe vorsehen. Wenn diese Führungsleiste bis hin in den Bereich der Arbeitsposition des Gestells 24 geführt werden soll, muß man eine Wegfahrbarkeit des entsprechenden Abschnitts der Führungsleiste vorsehen, damit hier der für das Gestell 24 benötigte Raum nicht beeinträchtigt wird.

Während der Zerlegeroboter 6 seine Arbeit z.B. an der in **Fig. 1** oberen Körperhälfte 20 durchführt, wird an der in **Fig. 1** unteren Rohrbahn 10 eine neue Körperhälfte 20 zu der Vorrichtung 2 hingefördert und mittels der Videokamera 4 vermessen. Dann dreht sich der Zerlegeroboter 6 um 180° und führt seine Arbeit an der in **Fig. 1** unteren Körperhälfte 20 durch, während an der oberen Rohrbahn 10 die nächste Körperhälfte 20 vorbereitet wird.

## Patentansprüche

1. Vorrichtung zum lagedefinierten Fixieren von hängenden Schlachttier-Körperteilen, insbesondere bei der automatisierten Schlachttierzerlegung, mit einem Gestell (24) und einer Mehrzahl von Anlageelementen (48), die an dem Gestell (24) befestigt sind, gekennzeichnet als Vorrichtung zum lagedefinierten Fixieren von hängenden Schlachttier-Körperhälften (20)
(a) dadurch, daß die genannten Anlageelemente (48) so positioniert sind, daß die Trennseite der Körperhälfte (20) an mehreren Stellen ihres bauchseitigen Randbereichs und ihres rückenseitigen Randbereichs durch Anlage abstützbar ist,
(b) wobei die Anlageflächen (50) der Anlageelemente (48) in einer gemeinsamen Ebene liegen;
(c) durch einen an dem Gestell (24) befestigten, durch Fremdkraft schwenkbaren Halter (52) pro Anlageelement (48), um die Anlagestellen der Körperhälfte (20) gegen das betreffende Anlageelement (48) zur Anlage zu bringen und /oder in Anlage zu halten;
(d) und durch ein an dem Gestell (24) befestigtes, durch Fremdkraft betätigbares Drückelement (42) zum Drücken gegen den bauchseitigen Randbereich (64) der Körperhälfte (20) in einer Höhenposition, die im wesentlichen der Höhenposition eines Anlageelement-Halter-Paars (40) für den rückenseitigen Randbereich im Höhenbereich der Rippen der Körperhälfte (20) entspricht.

2. Vorrichtung nach Anspruch 1,
**dadurch gekennzeichnet**,
daß mindestens das Drückelement (42) und/oder das rippenbereichszugeordnete Anlageelement-Halter-Paar (40) durch Fremdkraft in der Höhe verstellbar ist.

3. Vorrichtung nach Anspruch 2,
**dadurch gekennzeichnet**,
daß die Höhenverstellung nach Maßgabe einer Erfassung der Länge der Körperhälfte (20) erfolgt.

4. Vorrichtung nach mindestens einem der Ansprüche 1 bis 3,
**dadurch gekennzeichnet**,
daß das rippenbereichzugeordnete Anlageelement-Halter-Paar (40) das unterste für den rückenseitigen Randbereich der Körperhälfte (20) ist.

5. Vorrichtung nach mindestens einem der Ansprüche 1 bis 4,
**dadurch gekennzeichnet**,
daß die zu fixierenden Körperhälften (20) der Reihe nach hängend zu der Vorrichtung (2) hingefördert werden und daß das Gestell (24) insgesamt oder zum Teil durch Fremdkraft quer zu der Hinförderrichtung verfahrbar ist.

6. Vorrichtung nach mindestens einem der Ansprüche 1 bis 5,
**dadurch gekennzeichnet**,
daß das Gestell (24) als Hauptbestandteile aufrechte Stangen (26), vorzugsweise vier aufrechte Stangen (26), aufweist, die mindestens paarweise durch Querstangen (28) verbunden sind.

7. Vorrichtung nach mindestens einem der Ansprüche 1 bis 6,
**dadurch gekennzeichnet**,
daß das Gestell (24) entsprechend der Schräghängung der Körperhälften (20) schräggestellt ist.

8. Vorrichtung nach mindestens einem der Ansprüche 1 bis 7,
**dadurch gekennzeichnet**,
daß mindestens eines der genannten Fremdkraftbetätigungen eine Zylinder-Kolben-Einheit ist.

9. Vorrichtung nach mindestens einem der Ansprüche 1 bis 8,
**dadurch gekennzeichnet**,
daß drei Anlageelement-Halter-Paare (40) für den rückenseitigen Randbereich und zwei Anlageelement-Halter-Paare (40) für den bauchseitigen Randbereich der Körperhälfte vorgesehen sind.

10. Anlage zur automatisierten Zerlegung von Schlachttier-Körperhälften,
**gekennzeichnet durch:**
(a) eine Vorrichtung (2) zum lagedefinierten Fixieren der zu zerlegenden Körperhälfte (20), mit den Merkmalen mindestens eines der Ansprüche 1 bis 9;
(b) einem Gerät (4) zur optischen Erfassung der Gestalt der Körperhälfte (20);
(c) einem Rechner (8), der aufgrund der Erfassung der Gestalt der Körperhälfte (20) die Lage von zu führenden Zerlegungsschnitten berechnet;
(d) und einen Zerlegeroboter (6), der aufgrund der von dem Rechner (8) errechneten Daten Zerlegungsschnitte ausführt.

## Claims

1. A device for fixing suspended carcass body parts in defined positions, in particular in automated carcass dividing, said device comprising a frame (24) and a plurality of abutment elements (24) mounted on the frame (24),
characterized as a device for fixing suspended carcass body halves (20) in defined positions
(a) in that the said abutment elements (48) are positioned such that the separation side of the body half (20) can be supported by abutment on several positions of its belly-side edge portion and its back-side edge portion,
(b) the abutment areas (50) of the abutment elements (48) being located in a common plane;
(c) by a holder (52) for each abutment element (48), which is attached to the frame (24) and pivotable by external force in order to bring the abutment sites of the body half (20) into abutment against the respective abutment element (48) and/or hold them in abutment thereagainst;
(d) and by a pushing element (42) attached to the frame (24) and adapted to be actuated by external force for pushing against the belly-side edge portion (64) of the body half (20) at a height position corresponding in essence to the height position of an abutment element/holder pair (40) for the back-side edge portion in the height region of the ribs of the body half (20).

2. The device of claim 1,
characterized in that at least the pushing element (42) and/or the abutment element/holder pair (40) associated with the rib region is adjustable in height by external force.

3. The device of claim 2,
characterized in that the height adjustment is carried out in accordance with sensing the length of the body half (20).

4. The device of at least one of claims 1 to 3,
characterized in that the abutment element/holder pair (40) associated with the rib region is the lowermost one for the back-side edge portion of the body half (20).

5. The device of at least one of claims 1 to 4,
characterized in that the body halves (20) to be fixed are conveyed in series to the device (2) in suspended manner and in that the frame (24) in its entirety or in part is movable by external force transversely of said conveying direction.

6. The device of at least one of claims 1 to 5,
characterized in that the frame (24), as main components, comprises upright rods (26), preferably four upright rods (26), which are connected at least in pairs by transverse rods (28).

7. The device of at least one of claims 1 to 6,
characterized in that the frame (24) is inclined in accordance with the inclined suspension of the body halves (20).

8. The device of at least one of claims 1 to 7,
characterized in that at least one of said external-force actuating means is a piston and cylinder unit.

9. The device of at least one of claims 1 to 8,
characterized in that there are provided three abutment element/holder pairs (40) for the back-side edge portion and two abutment element/holder pairs (40) for the belly-side edge portion of the body half.

10. A system for automated dividing of carcass body halves,
characterized by:
(a) a device (2) for fixing the body half (20) to be divided in a defined position, said device comprising the features of at lest one of claims 1 to 9;
(b) an apparatus (4) for optically sensing the shape of the body half (20);
(c) a computer (8) which, on the basis of the sensed shape of the body half (20), calculates the position of dividing cuts to be made;
(d) and a dividing robot (6) performing dividing cuts on the basis of the data calculated by said computer (8).

## Revendications

1. Dispositif pour la fixation en une position définie de parties de carcasse d'animaux de boucherie, lors du dépeçage automatisé d'animaux de boucherie, comportant un bâti (24) et une pluralité d'éléments d'application (48), qui sont fixés au bâti (24), caractérisé en tant que dispositif pour la fixation en une position définie de moitiés de carcasse (20) d'animaux de boucherie
(a) en ce que lesdits éléments d'application (48) sont positionnés de manière que le côté de séparation des moitiés de carcasse (20) puisse être soutenu par application en plusieurs points de leur zone de bordure côté ventre et de leur zone de bordure côté dos,
(b) les surfaces d'application (50) des éléments d'application (48) se trouvant dans un plan commun ;
(c) par un support (52), pour chaque élément d'application (48), qui est fixé au bâti (24) et qui peut pivoter sous l'effet d'une force externe, afin d'amener et/ou de maintenir les points d'application des moitiés de carcasse (20) en application contre l'élément d'application (48) concerné,
(d) et par un élément de pression (42) qui est fixé au bâti (24) et qui peut être actionné par une force externe, pour la pression contre la zone de bordure (64) côté ventre des moitiés de carcasse (20) dans une position en hauteur qui correspond sensiblement à la position en hauteur d'une paire de supports (40) des éléments d'application pour la zone de bordure côté dos à hauteur des côtes des moitiés de carcasse (20).

2. Dispositif selon la revendication 1, caractérisé en ce qu'au moins l'élément de pression (42) et/ou la paire de supports (40) des éléments d'application, associée à la zone des côtes, est réglable en hauteur par une force externe.

3. Dispositif selon la revendication 2, caractérisé en ce que le réglage en hauteur s'effectue en fonction d'une détection de la longueur des moitiés de carcasse (20).

4. Dispositif selon l'une au moins des revendications 1 à 3, caractérisé en ce que la paire de supports (40) des éléments d'application, associée à la zone des côtes, est la paire la plus basse pour la zone de bordure côté dos des moitiés de carcasse (20).

5. Dispositif selon l'une au moins des revendications 1 à 4, caractérisé en ce que les moitiés de carcasse (20) à fixer sont transportées, dans l'ordre et suspendues, vers le dispositif (2), et en ce que le bâti est déplaçable dans sa totalité ou en partie par une force externe, transversalement à la direction de transport.

6. Dispositif selon l'une au moins des revendications 1 à 5, caractérisé en ce que le bâti (24) comporte en tant que composants principaux des barres verticales (26), de préférence quatre barres verticales (26), qui sont reliées au moins deux par deux par des barres transversales (28).

7. Dispositif selon l'une au moins des revendications 1 à 6, caractérisé en ce que le bâti (24) est incliné obliquement conformément à la suspension oblique des moitiés de carcasse (20).

8. Dispositif selon l'une au moins des revendications 1 à 7, caractérisé en ce que l'un au moins desdits actionnements par une force externe est une unité à cylindre et piston.

9. Dispositif selon l'une au moins des revendications 1 à 8, caractérisé en ce que trois paires de supports (40) des éléments d'application sont prévues pour la zone de bordure côté dos et deux paires de supports (40) des éléments d'application sont prévues pour la zone de bordure côté ventre des moitiés de carcasse.

10. Installation de dépeçage automatisé de moitiés de carcasse d'animaux de boucherie, caractérisée par :
(a) un dispositif (2) pour la fixation en une position définie des moitiés de carcasse (20) à dépecer, présentant les caractéristiques d'au moins l'une des revendications 1 à 9;
(b) un appareil (4) pour la détection optique de la forme des moitiés de carcasse (20);
(c) un ordinateur (8) qui calcule la position de coupes de dépeçage à effectuer, sur la base de la détection de la forme des moitiés de carcasse (20);
(d) et par un robot de dépeçage (6) qui, à partir des données calculées par l'ordinateur (8), exécute les coupes de dépeçage.
